# EUROPÄISCHE PATENTSCHRIFT

(11) **EP 1 024 038 B1**
(45) Veröffentlichungstag und Bekanntmachung des Hinweises auf die Patenterteilung: **19.11.2003**
(21) Anmeldenummer: 00101812.6
(22) Anmeldetag: 28.01.2000
(51) Int. Cl.: B60H 1/00, B60H 1/24

(54) **Verfahren zum Stand-Klimatisieren eines Kraftfahrzeugs**
Air-conditioning method for a motor vehicle while stationary
Procédé de climatisation d'un véhicule automobile pendant l'arrêt

(30) Priorität: 30.01.1999 DE 19903769
(43) Veröffentlichungstag der Anmeldung: 02.08.2000
(73) Patentinhaber: Webasto Vehicle Systems International GmbH, 82131 Stockdorf (DE)
(72) Erfinder: Kortüm, Franz-Josef, 85276 Pfaffenhofen (DE); Wecker, Reinhard, 82223 Eichenau (DE)
(74) Vertreter: Wiese, Gerhard

(56) Entgegenhaltungen:
- DE-A- 3 604 226
- DE-U- 29 808 795
- US-A- 4 658 597
- US-A- 5 167 573

## Beschreibung

Die vorliegende Erfindung betrifft ein Verfahren zum Stand-Klimatisieren der Fahrgastzelle eines Kraftfahrzeuges mittels einer Klimaanlage unter Nutzung von Solarenergie, die über zumindest ein Solarmodul gewonnen wird, das am Kraftfahrzeug, insbesondere auf dem Kraftfahrzeugdach angebracht ist und auch zur Aufladung einer Batterie des Kraftfahrzeugs genutzt wird.

Fahrgastzellen von Kraftfahrzeugen heizen sich in der warmen Jahreszeit im Stand, vor allem wenn sie voller Sonne ausgesetzt sind, auf unangenehm hohe Temperaturen, typischerweise von 60 bis 80° auf. Folge dieser extrem hohen Fahrgastzellentemperaturen ist unter anderem ein Wärmeschock beim Einsteigen in eine derart aufgeheizte Fahrgastzelle. Besonders problematisch sind entsprechend hoch aufgeheizte Fahrzeugsitze. Die Folge ist ein sehr unangenehm verschwitzter Rücken. Mit dem Betrieb der Klimaanlage kann dies dann sogar zu gesundheitlichen Schäden führen. Unangenehm ist auch das entsprechend stark aufgeheizte Lenkrad und gegebenenfalls das aufgeheizte Armaturenbrett. Selbst dann, wenn beim Einsteigen in eine stark aufgeheizte Fahrgastzelle die Lüftung sofort mit höchster Stufe betrieben und gegebenenfalls auch die motorangetriebene Klimaanlage in Funktion gesetzt wird, dauert es einige Minuten, bis sich in der Fahrgastzelle durch diese Klimatisierungsmaßnahmen eine erträgliche Temperatur eingestellt hat.

Es besteht deshalb seit längerem der Bedarf an einer wirksamen Klimatisierung der Fahrgastzelle eines Kraftfahrzeugs im Stand, bevor der Fahrer und gegebenenfalls Fahrgäste die Fahrgastzelle betreten. Es sind auf diesem Gebiet verschiedene Vorschläge gemacht worden, die jedoch bezüglich des erforderlichen Energieaufwands problematisch sind. Insbesondere ist vorgeschlagen worden, Solarenergie heranzuziehen, um die Fahrgastzelle zu belüften bzw. zu klimatisieren, wie nachfolgend erläutert.

Demnach ist es beispielsweise aus der US-A-4 658 597 bekannt, ein eingangs genanntes Verfahren zum Stand-Klimatisieren der Fahrgastzelle eines Kraftfahrzeugs mittels einer Stand-Klimaanlage unter Nutzung von Solarenergie einzusetzen. Dieses bekannte Verfahren ist so ausgelegt, daß die mittels Solarmodul gewonnene Solarenergie in erster Linie, d.h. privilegiert zum Betrieb einer Stand-Klimaanlage genutzt wird, die in bekannter Weise kühle Luft in die Fahrgastzelle leitet. Für den Fall, daß beim Betrieb der Stand-Klimaanlage noch Energie verbleibt, wird diese gezielt der Kraftfahrzeug-Batterie zugeführt, um diese zu laden. Im übrigen ist die Kraftfahrzeug-Batterie am Betrieb der Stand-Klimaanlage nicht beteiligt. Eine Bedingung zum Starten der Stand-Klimaanlage ist, daß die Temperatur in der Fahrgastzelle einen Schwellenwert übersteigt. Anderenfalls wird die Stand-Klimaanlage nicht aktiviert. Problematisch bei diesem bekannten Verfahren ist die Speisung der Stand-Klimaanlage ausschließlich aus dem Solarmodul. Zum Anmeldetag dieser US-Patentschrift standen Solarmodule mit einer Leistung, die ausreicht, eine herkömmliche Stand-Klimaanlage mit relativ mäßigem Wirkungsgrad zu betreiben, noch nicht zu Verfügung. Auch heutzutage liefert ein beispielsweise auf dem Dach eines Kraftfahrzeugs einsetzbares Solarmodul nur eine Leistung von maximal 150 W, während eine Klimaanlage, wie sie zum Anmeldezeitpunkt dieser US-Patentschrift zur Verfügung stand, einen Leistungsbedarf von mindestens 7 bis 8 kW hat. Selbst bei Einsatz einer Klimaanlage mit höherem Wirkungsgrad, wie sie heutzutage zur Verfügung steht, ist dieses Konzept nicht realisierbar, da das Solarmodul, das im Zusammenhang mit einem Kraftfahrzeug verwendet werden kann, nicht die erforderliche Leistung liefert, um die Klimaanlage ausreichend lange zu betreiben, damit die Temperatur von bis zu 80°, die sich in einer der Sonne ausgesetzten Fahrgastzelle ausbildet, ausreichend erniedrigt werden kann.

Als weitere Maßnahme zum Klimatisieren der Fahrgastzelle eines Kraftfahrzeugs ist es beispielsweise aus JP-Abstracts 58-67510, 58-67511 und 60-53423 bekannt, mittels Solarenergie von einem Solarmodul auf dem Dach eines Kraftfahrzeugs einen Ventilator zur Belüftung der Fahrgastzelle zu betreiben, welcher Außenluft, bevorzugt von der Unterseite des Kraftfahrzeugs in die Fahrgastzelle saugt und warme Luft aus den Entlüftungsschlitzen des Kraftfahrzeugs herausdrängt. Aus den beiden zuerst genannten Druckschriften ist es außerdem bekannt, Teile des Fahrgastraums, nämlich die Sitze und die Lenksäule mit dem Lenkrad durch den Luftstrom zu kühlen, welchen dieser Solarstrom-betätigte Lüfter in die Fahrgastzelle fördert. Mit dieser Maßnahme läßt sich, zumindest bei direkter Förderung von kühlerer Luft in die Fahrgastzelle die Innenraumtemperatur der Fahrgastzelle vor dem Einsteigen um ca. 20 bis 30° absenken, d.h. ausgehend von einer Temperatur der Fahrgastzelle bei direkter Sonneneinstrahlung von 80°C auf eine Temperatur von 50 bis 60°C. Diese Endtemperatur in der Fahrgastzelle reicht jedoch nicht aus, damit sich Fahrer und Fahrgäste in der Fahrgastzelle wohlfühlen.

Angesichts dieses Standes der Technik liegt der Erfindung die Aufgabe zugrunde, das eingangs genannte Verfahren zum Stand-Klimatisieren der Fahrgastzelle eines Kraftfahrzeugs derart auszubilden, daß die Fahrgastzelle bei starker Sonneneinstrahlung im Stand vor dem Betreten auf eine angenehme Temperatur heruntergekühlt werden kann, ohne die daran beteiligten stromliefernden Aggregate zu überlasten.

Gelöst wird diese Aufgabe durch die kennzeichnenden Merkmale des Anspruchs 1. Vorteilhafte Weiterbildungen der Erfindung sind in den Unteransprüchen angegeben.

Die Erfindung schlägt ein neuartiges Klimatisierungskonzept vor, gemäß dem ausgehend von dem die Energie zur Verfügung stellenden Solarmodul primär die Kraftfahrzeug-Batterie voll aufgeladen wird, um die für den kurzzeitigen Betrieb einer Klimaanlage erforderliche Energie in ausreichendem Maße bereitzustellen. Bevor die Klimaanlage jedoch im Stand aktiviert wird, ist erfindungsgemäß vorgesehen, gleichzeitig zur Batterieladung die Stand-Lüftungsanlage mit einem Teil des von dem Solarmodul erzeugten Stroms zu versorgen. Die Stand-Lüftungsanlage benötigt relativ wenig Energie und ist damit problemlos über einen längeren Zeitraum, bevorzugt über den gesamten Zeitraum der Sonneneinstrahlung betreibbar ohne die Batterieladung wesentlich zu beeinträchtigen. Wie einleitend erläutert, läßt sich mit Hilfe der Stand-Lüftungsanlage die Temperatur in der Fahrgastzelle um 20 bis 30° absenken. Ausgehend von diesem dann erreichten Temperaturniveau von maximal 50 bis 60° ist dann eine Klimaanlage wirksam derart einsetzbar, daß in relativ kurzer Zeit typischerweise innerhalb von ca. 10 Minuten die Temperatur in der Fahrgastzelle so weit erniedrigt ist, daß sie für den Fahrer oder zusteigende Fahrgäste erträglich ist.

Mit anderen Worten sieht das erfindungsgemäße Konzept die Bereitstellung einer ausreichenden Energiemenge zum kurzzeitigen Betrieb der Klimaanlage im Stand vor, welche dazu bestimmt ist, die hauptsächliche Klimatisierung der Fahrgastzelle im Stand zu übernehmen. Das heißt, die zum Betreiben der Stand-Klimaanlage erforderliche Energie wird indirekt aus dem Solarmodul gewonnen, dessen Energie in der Kraftfahrzeug-Batterie mit dem Ziel einer Voll-Ladung abgespeichert wird. Vor der eigentlichen Klimatisierung ist jedoch erfindungsgemäß parallel zur Batterie-Ladung die Stufe einer Vorklimatisierung mit Hilfe der Stand-Lüftungsanlage geschaltet, deren Zweck darin besteht, die hohe Temperatur in der Fahrgastzelle auf ein Niveau abzusenken, ausgehend von welchem die Klimaanlage aufgrund ihres Wirkungsgrads in der Lage ist, innerhalb einer kurzen Zeitdauer noch im Stillstand des Fahrzeugmotors eine erträgliche Temperatur in der Fahrgastzelle bereitzustellen.

Vorteilhafterweise wird als Stand-Klimaanlage eine Klimaanlage kleiner Leistung, beispielsweise eine elektrisch betriebene Klimaanlage mit einem COP (Coefficient of Performance) von 3 bis 5 genutzt. Wenn also beispielsweise eine 12 V-Batterie mit einer Kapazität von 60 Ah zur Verfügung steht, wird dieser bei einer elektrischen Leistungsaufnahme einer elektrischen Klimaanlage von 1 kW (entsprechend einer Kälte-Leistung von 3...5 kW) bei einem Betrieb der Klimaanlage im Stand von 10 Minuten eine Energie von weniger als 15 Ah zum Betreiben der Klimaanlage entnommen. Eine solche leistungsmäßig kleine Klimaanlage kann gegebenenfalls auch zur Klimatisierung während des Fahrbetriebs herangezogen werden, wobei die Klimaanlage in diesem Fall in herkömmlicher Weise aus der Lichtmaschine bzw. dem Motor gespeist wird. Eine solche Klimaanlage kleiner Leistung kann insbesondere bei Fahrzeugen mit einem kleineren Innenraum unter Umständen eine konventionelle Klimaanlage sogar vollständig ersetzen, da durch das erfindungsgemäße Verfahren eine gute Vorkühlung und damit eine ausreichende Behaglichkeit erzielbar ist.

Alternativ zu der Klimaanlage kleiner Leistung mit hohem Wirkungsgrad kann als Stand-Klimaanlage für das erfindungsgemäße Verfahren auch eine im Fahrbetrieb des Fahrzeugs eingesetzte und dabei von dessen Motor angetriebene Fahrzeug-Klimaanlage vom Motor abgekoppelt und mit verminderter Leistung betrieben werden, beispielsweise mit halber Leistung. Dabei kann beispielsweise bei einem Zwei-Zylinderkompressor ein Zylinder durch Öffnen eines Dekompressionsventils oder Öffnen einer Magnetkupplung außer Betrieb genommen werden. Selbstverständlich gilt dies auch bei Mehrzylinder-Kompressoren für das Abschalten eines oder mehrerer Zylinder.

Um zu verhindern, daß unter ungünstigen Bedingungen die Kraftfahrzeug-Batterie durch Antreiben in der Klimaanlage im Stand überlastet wird, ist vorteilhafterweise eine Trenneinrichtung vorgesehen, durch welche bei Batterie-Unterspannung die Verbindung der Batterie zur Klimaanlage unterbrochen wird.

Um das Problem erhitzter Fahrzeugsitze, eines erhitzten Lenkrads und gegebenenfalls eines erhitzten Armaturenbretts zu überwinden, also von Teilen, die mit den Insassen der Fahrgastzelle in Berührung gelangen, ist vorgesehen, daß diese Teile durch die Klimaanlage bevorzugt gekühlt werden.

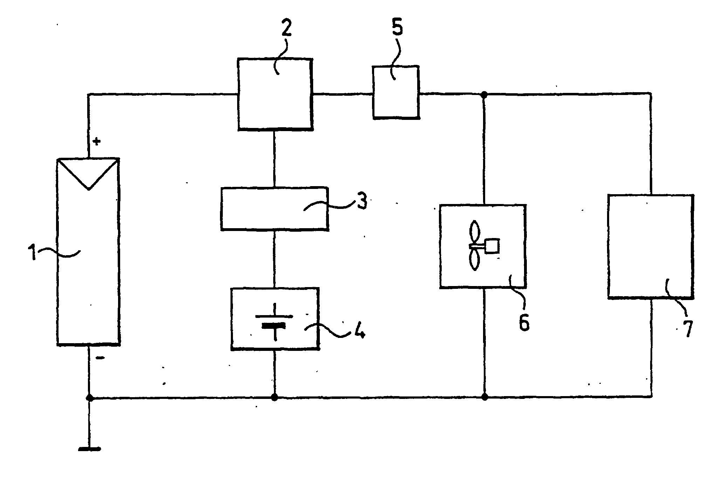

Nachfolgend wird die Erfindung anhand der Zeichnung beispielhaft näher erläutert; die einzige Figur der Zeichnung zeigt schematisch eine Anlage zur Durchführung des erfindungsgemäßen Verfahren zum Stand-Klimatisieren der Fahrgastzelle eines Kraftfahrzeugs.

Diese Anlage umfaßt ein Solarmodul 1, das bevorzugt in das Dach eines Kraftfahrzeugs integriert ist. Das Solarmodul 1 ist beispielsweise mit ihrem Minuspol auf Kraftfahrzeugmasse gelegt. Der Pluspol des Solarmoduls 1 ist über eine Energieverteilungsschaltung 2 mit den Energieabnehmern dieser Anlage (Bezugsziffern 6 und 7, wie nachfolgend näher erläutert) und andererseits mit der Kraftfahrzeugbatterie 4 verbunden, die in an sich bekannter Weise mit einem Pol (dem Minuspol) auf Masse gelegt ist. Zwischen diese Energieverteilungseinrichtung 2 und die Batterie 4 ist eine Trenneinrichtung 3 geschaltet, welche die Batterie 4 von der Energieverteilungseinrichtung 2 bezüglich einer Stromlieferung von der Batterie 4 zu der Energieverteilungseinrichtung 2 abkoppelt.

Die Energieverteilungseinrichtung 2 arbeitet derart, daß in erster Linie bzw. privilegiert die Batterie 4 mittels des Solarmoduls 1 aufgeladen wird. Das heißt, die Batterie 4 wird im Fahrbetrieb in herkömmlicher Weise über die Lichtmaschine des Kraftfahrzeugs aufgeladen und im Stand wird diese Ladung ergänzt durch den Haupt-Anteil von beispielsweise etwa 80 % der mittels des Solarmoduls 1 gewonnenen Energie. Den nicht zum Aufladen der Batterie 4 benötigten Teil der Energie leitet die Energieverteilereinrichtung 2 unmittelbar weiter an die Stromabnehmer der Anlage, nämlich zum einen an eine Stand-Lüftungsanlage 6 und zum anderen an die Klimaanlage 7, die parallel zu der Anordnung aus Energieverteilungseinrichtung 2, Trenneinrichtung 3 und Batterie 4 geschaltet sind.

Der Energieverteilungseinrichtung 2 unmittelbar nachgeschaltet ist ein Thermoschalter 5, welcher die Belüftungsanlage und die Stand-Klimaanlage unterhalb einer festgelegten Temperatur der Fahrgastzelle von beispielsweise 25° von der Batterie 4 und der Energieverteilungseinrichtung 2 trennt. Bei Überschreiten der vorgegebenen Temperatur werden die Aggregate 6 und 7 aus der Batterie und/oder der Solarzelle 1 mit Energie versorgt.

Statt eines fest vorgegebenen Sollwerts des Thermoschalters 5 kann auch der Sollwert , einer an einer Klimatisierungsautomatik des Fahrzeug eingestellten Temperatur herangezogen werden. Optional kann der Thermoschalter 5 auch nur den Betrieb der Klimaanlage 7 beeinflussen, wogegen die Standlüftungsanlage 6 unabhängig davon betrieben wird.

Die Anlage ist so ausgelegt, daß sich im Stand parallel zur Batterieladung zunächst die Stand-Lüftungsanlage im Betrieb befindet, um die Temperatur in der Fahrgastzelle um ca. 20 bis 30° abzusenken, indem die Stand-Lüftungsanlage (kühle) Frischluft in die Fahrgastzelle saugt und warme Luft aus der Fahrgastzelle über Entlüftungsschlitze herausdrängt. Sobald die Batterie ihren vollen Ladungszustand erreicht hat, steuert die Energieverteilungseinrichtung die gesamte vom Solarmodul 1 erzeugte Energie zur Stand-Lüftungsanlage 6 um, wodurch deren Leistung deutlich steigt, sodaß die gewünschte Temperaturabsenkung von 20...30° C vor Inbetriebnahme der Stand-Klimaanlage 7 an Solarstrahlungsintensiven Tagen mit hoher Wahrscheinlichkeit gewährleistet ist. Kurz bevor Fahrgäste bzw. der Fahrer die Fahrgastzelle betreten, wird entweder zeitgebergesteuert oder mittels einer Fernsteuerung die Klimaanlage 7 aktiviert, die sich dabei typischerweise für etwa 10 Minuten im Betrieb befindet, bevor sie wieder zur Batterieschonung abgeschaltet wird. Innerhalb dieses Zeitraums ist die Stand-Klimaanlage 7 aufgrund der Vorklimatisierung mittels der Stand-Lüftungsanlage 6 in der Lage, die Temperatur in der Fahrgastzelle auf ein annehmbares Niveau abzusenken, ohne die Startfähigkeit des Fahrzeugmotors zu gefährden.

### Bezugszeichenliste

- 1: Solarmodul
- 2: Energieverteilungsschaltung
- 3: Trenneinrichtung
- 4: Batterie
- 5: Thermoschalter
- 6: Stand-Lüftungsanlage
- 7: Klimaanlage

## Patentansprüche

1. Verfahren zum Klimatisieren der Fahrgastzelle eines Kraftfahrzeuges mittels einer Klimaanlage (7) unter Nutzung von Solarenergie, die über zumindest ein Solarmodul (1) gewonnen wird, das am Kraftfahrzeug, insbesondere auf dem Kraftfahrzeugdach angebracht ist und auch zur Aufladung einer Batterie (4) des Kraftfahrzeugs genutzt wird, **dadurch gekennzeichnet, daß** die Solarenergie zusätzlich oder alternativ zur Aufladung der Kraftfahrzeug-Batterie (4), auch zum Betrieb einer Stand-Lüftungsanlage (6) genutzt wird, und wobei die Klimaanlage (7) kurze Zeit vor Fahrtbeginn aktiviert wird und den größten Teil ihres Energiebedarfs aus der Kraftfahrzeug-Batterie (4) bezieht.

2. Verfahren nach Anspruch 1, **dadurch gekennzeichnet, daß** als Stand-Klimaanlage eine Klimaanlage kleiner Leistung mit einem COP (Coefficient of Performance) von 3 bis 5 genutzt wird.

3. Verfahren nach Anspruch 1, **dadurch gekennzeichnet, daß** als Klimaanlage (7) eine im Fahrbetrieb des Kraftfahrzeugs eingesetzte und zu diesem Zweck der Stand-Klimatisierung von dessen Motor angetriebene Fahrzeug-Klimaanlage zum Zweck der Stand-Klimatisierung vom Motor abgekoppelt und mit verminderter Leistung betrieben genutzt wird.

4. Verfahren nach Anspruch 1, 2 oder 3, **dadurch gekennzeichnet, daß** die Verbindung der Kraftfahrzeug-Batterie (4) mit der Stand-Lüftungsanlage (6) und/oder der Klimaanlage (7) bei Batterie-Unterspannung getrennt wird.

5. Verfahren nach einem der Ansprüche 1 bis 4, **dadurch gekennzeichnet, daß** die mit Insassen der Fahrgastzelle in Berührung kommende Teile des Kraftfahrzeugs, wie Sitze, das Lenkrad und das Armaturenbrett durch die Klimaanlage bevorzugt gekühlt werden.

6. Verfahren nach Anspruch 1, **dadurch gekennzeichnet, daß** als Klimaanlage eine elektrische Klimaanlage (7) verwendet wird, die im Fahrbetrieb auf voller Leistung an der Lichtmaschine bzw. dem Bordnetz arbeitet und als Stand-Klimaanlage mit verminderter Leistung am Solarmodul (1) bzw. and der Batterie (4) arbeitet.

## Claims

1. Method of air-conditioning the passenger compartment of a motor vehicle by means of an air-conditioning system (7) by using solar energy which is obtained via at least one solar module (1), which is fitted to the motor vehicle, in particular on the motor vehicle roof, and is also used for charging a battery (4) belonging to the motor vehicle, **characterized in that** the solar energy, in addition to or alternatively to charging the motor vehicle battery (4), is also used to operate a standing-vehicle ventilation system (6), and the air-conditioning system (7) being activated for a short time before the start of a journey and the major part of its energy consumption drawn from the motor vehicle battery (4).

2. Method according to Claim 1, **characterized in that** the standing-vehicle air conditioning system used is an air-conditioning system of small output with a COP (coefficient of performance) of 3 to 5.

3. Method according to Claim 1, **characterized in that** the air-conditioning system (7) used is a vehicle air-conditioning system which is used during the driving operation of the motor vehicle and, for this purpose of standing-vehicle air conditioning, is driven by the engine of the said vehicle and, for the purpose of standing-vehicle air-conditioning, is uncoupled from the engine and operated at reduced output.

4. Method according to Claim 1, 2 or 3, **characterized in that** the connection between the motor vehicle battery (4) and the standing-vehicle ventilation system (6) and/or the air-conditioning system (7) is disconnected in the event of battery undervoltage.

5. Method according to one of Claims 1 to 4, **characterized in that** the parts of the motor vehicle which come into contact with occupants of the passenger compartment, such as seats, the steering wheel and the dashboard, are preferably cooled by the air-conditioning system.

6. Method according to Claim 1, **characterized in that** the air-conditioning system used is an electric air-conditioning system (7) which, during driving operation, operates at full output on the alternator or the on-board network and, as a standing-vehicle air-conditioning system, operates at reduced output on the solar module (1) and/or the battery.

## Revendications

1. Procédé pour la climatisation de la cabine passager d'un véhicule automobile au moyen d'une installation de climatisation ou de conditionnement (7) en utilisant l'énergie solaire, laquelle est gagnée via au moins un module solaire (1) qui est monté sur le véhicule automobile en particulier sur le toit du véhicule automobile, et qui est également utilisé pour charger une batterie (4) du véhicule automobile, **caractérisé en ce que** l'énergie solaire est utilisée en plus de ou alternativement pour la charge de la batterie (4) du véhicule automobile ainsi que pour le fonctionnement d'une installation d'aération fixe ou d'appoint (6), et procédé dans lequel l'installation de climatisation (7) est activée peu avant le démarrage et prélève la majeure partie de sa consommation d'énergie d'une batterie (4) du véhicule automobile.

2. Procédé selon la revendication 1, **caractérisé en ce qu'**en tant qu'installation de climatisation fixe ou d'appoint, une installation de climatisation à faible puissance avec un COP (Coefficient de performance) de 3 à 5 est utilisée.

3. Procédé selon la revendication 1, **caractérisé en ce qu'**en tant qu'installation de climatisation (7), une installation de climatisation de véhicule automobile utilisée lors de la marche du véhicule automobile et entraînée à cette fin de climatisation fixe ou d'appoint par le moteur de celui-ci, est désaccouplée du moteur pour la climatisation fixe ou d'appoint, et est utilisée avec un fonctionnement à puissance réduite.

4. Procédé selon l'une quelconque des revendications 1, 2 ou 3, **caractérisé en ce que** la liaison de la batterie (4) du véhicule automobile avec l'installation d'aération fixe ou d'appoint (6) et/ou l'installation de climatisation (7) est rompue en cas de sous-tension de la batterie.

5. Procédé selon l'une quelconque des revendications 1 à 4, **caractérisé en ce que** les éléments du véhicule automobile entrant en contact avec les occupants de la cabine des passagers tels les sièges, le volant et le tableau de bord, sont refroidis en priorité par l'installation de climatisation.

6. Procédé selon la revendication 1, **caractérisé en ce qu'**en tant qu'installation de climatisation on utilise une installation de climatisation électrique (7), laquelle travaille à pleine puissance lorsque branchée sur la dynamo d'éclairage ou génératrice et/ou sur le réseau de distribution de bord lors de la marche, et travaille en tant qu'installation de climatisation fixe ou d'appoint à puissance réduite lorsque branchée sur le module solaire (1) et/ou sur la batterie (4).
